# EUROPEAN PATENT APPLICATION

(11) **EP 3 454 399 A1**
(43) Date of publication of application: **13.03.2019**
(21) Application number: 17792503.9
(22) Date of filing: 05.05.2017
(51) Int. Cl.: H01M 4/587, H01M 4/36

(54) **METHOD FOR PREPARING BORON-DOPED POROUS CARBON SPHERE**

(30) Priority: 06.05.2016 CN 201610298107
(71) Applicant: Suzhou Hans Energy Storage Technology Co., Ltd., Suzhou, Jiangsu 215163 (CN); Nantong Volta Materials Ltd., Nantong, Jiangsu 226300 (CN)
(72) Inventor: ZHANG, Yuhong, Suzhou Jiangsu 215163 (CN)
(74) Representative: Lambsdorff & Lange Patentanwälte Partnerschaft mbB
(86) International application number: PCT/CN2017/083134
(87) International publication number: WO 2017/190677

(57) **Abstract**

A method for preparing a boron-doped porous carbon sphere, the method comprising the following steps: 1) dissolving a sugar carbon source and a boric acid in water at a certain proportion, mixing and stirring the mixture to obtain a transparent solution; 2) adding a silicon-based pore forming agent to form a precursor solution of a boron-doped porous carbon sphere; 3) spray drying (aerosol-assisted) the resulting precursor to obtain a solid precursor particle of the boron-doped carbon sphere; 4) pyrolyzing the resulting solid particle at a high temperature in an inert atmosphere to obtain a mixture in which a pore template SiO₂ is embedded in a boron-doped carbon sphere; and 5) removing the silicon-based pore forming agent from the mixture and drying to obtain the boron-doped porous carbon sphere. The present invention solves the problems in existing boron-doped carbon material technologies wherein the raw material cost is high, the preparation process is complicated, the boron doping amount is low and scalable industrial production is difficult to achieve. The present invention provides an alternative material for lithium ion batteries that is superior to the commercial graphite.

## Description

### TECHNICAL FIELD

This invention relates to a method for preparing a boron-doped carbon material, in particular, a method for making boron-doped porous carbon spheres.

### BACKGROUND

Among the various electrochemical energy storage devices or equipment, lithium-ion batteries, due to their high energy density and long cycle life, have already been widely used in mobile phones and electric vehicles. With a growing demand for the technology, there is a need for a higher performance rate and cycle stability in the next generation high-performance lithium-ion batteries, especially as to the need for the anode material. Currently, graphite has been used commercially asanode material. However, it has a low theoretical capacity (372 mAh g⁻¹) and inferior rate performance, which are keys to lithium ion battery performances. Therefore, domestic and foreign researchers have proposed a variety ofanode substitutes with high lithium-ion storage capacities, such as Sn, SnO₂, Si, ZnO, and various transition metal oxides. However, the materials mentioned above have problems during the lithium-insertion/extraction process, such as substantial volume changes, substantial electrode-electrolyte side reactions, and poor chemical stability of the electrode materials, thereby limiting the rate performance and cycle life of lithium-ion anode materials.

In comparison, carbon-based materials, especially porous carbon materials, have high chemical stability and abundant porous structures. As anode materials for lithium-ion batteries, carbon-based materials can absorb and store lithium ions with their abundant pore structures and large specific surface area, thereby greatly improving the lithium-ion storage capacity as compared to graphite. Relevant studies have shown that carbon-based materials doped with heteroatoms (such as nitrogen doping and boron doping) can further improve the capacity, rate performance and cycle stability of lithium-ion anode materials. Furthermore, boron doping can enhance the lithium-ion adsorption sites in the carbon materials for lithium-ion storage, thereby improving lithium-ion storage capacity, Moreover, boron-containing structural units with high chemical stability, such as BC₃, BC₂O and BCO₂, can be introduced into the carbon skeleton structure, thus greatly improving the structural stability of carbon materials in electrochemical reactions, especially for cyclic stability under high current density.

Existing methods for preparing boron-doped porous carbon materials or graphite-doped materials include the chemical vapor deposition method, the boron source post-treatment method, and the boron source co-hydrothermal synthesis method. Problems with current methods for the preparation of boron-doped carbon-based materials, include, among others, high raw material costs, time-consuming and complicated production methods that are difficult to scale up, and low boron doping concentrations(< 4-wt%). To compensate for the deficiencies in the preparation methods mentioned above, the present invention provides a simple method towards the technical problem of preparing boron-doped porous carbon spheres that is capable of in-situ boron doping and has a large-scale production potential.

### SUMMARY

The preparation method of boron-doped porous carbon spheres provided by the present invention solves the current problems of high cost, low boron doping and difficult-to-scale production, by using boric acid, carbohydrates, and silicon-based pore-forming agents as sources of boron, carbon, and a pore template, to obtain boron-doped porous carbon spheres by a self-assembly process assisted by a spray drying treatment.

The preparation mechanism and key ideas of the present invention are as follows: a precursor solution of boron-doped carbon is formed by self-assembly between the hydroxyl groups of boric acid and carbohydrates; a silicon-based pore-forming agent capable of forming a good complexation with boric acid and carbohydrates is added to the precursor solution to create pores; the precursor solution is passed through a spray drying process (aerosol-assisted) to form polydispersed nanospheres. Meanwhile, aerosol droplets formed from boron sources, carbon sources, and pore-forming agents undergo a self-assembly reaction, guided by solvent evaporation and an initial condensation polymerization reaction, to form solid spheres; porous carbon spheres, which are doped with boron in situ in high concentrations, are then obtained through a high-temperature pyrolysis process and a process for removing the pore template. As can be seen from the above description, the multidimensional structural properties of the doped porous carbon spheres obtained by the present invention can be regulated and optimized, including their external morphology (continuous production of polydispersed nanospheres can be achieved), pore structure (through the selection of pore templates and proportion control), boron doping concentrations (which can be achieved through the regulation of boric acid proportions in the precursor solution). In addition, the low cost choice of materials and the simple continuous production process mean that the boron-doped porous carbon spheres obtained by the present invention have important application potential inanode materials for lithium-ion batteries.

The specific technical protocol of the present invention is:
A method for preparing boron-doped porous carbon spheres is provided, comprising the following steps:
(1) dissolving and mixing a carbohydrate carbon source and boric acid (boron source) in water at desired proportions to form a transparent solution;
(2) adding and mixing a silicon-based pore-forming agent to the solution from step (1) to form a precursor solution for the boron-doped porous carbon spheres;
(3) spray drying (aerosol-assisted)the precursor solution obtained in step (2), wherein the precursor solution undergoes a hydroxyl-guided self-assembly and polycondensation process during the spraying and heating process, thereby obtaining solid precursor particles of the boron-doped porous carbon spheres.
(4) heating the solid precursor particles obtained in step (3) to 600°C ∼1000 °C in an inert atmosphere to obtain a mixture in which a pore template SiO₂ is embedded in a boron-doped carbon spheres.
(5) removing the silicon-based pore-forming agent from the mixture obtained in step (4), thereby obtaining the boron-doped porous carbon spheres.

Optimally, the carbohydrate carbon source mentioned above is selected from one or more of the following: glucose, sucrose, maltose, chitosan and soluble starch, wherein the boric acid to carbohydrate mass ratio is 0.1:100 ∼ 1:1.

Optimally, the silicon-based pore-forming agent is selected from one or more of tetraethyl orthosilicate (TEOS), nano-silica (SiO₂) and sodium silicate, wherein the mass ratio of the silicon-based pore-forming agent to carbohydrate is 5:1 ∼ 1:10.

Optimally, the heating temperature of the spray drying process is 300 °C ∼ 600 °C.

Optimally, the aerosol in the spray drying process is a droplet carrying gas, wherein the gas is one of or more of nitrogen gas and/or argon gas, wherein the gas flow rate is 0 ∼ 50 L/min.

Optimally, the inert atmosphere in step 4) is one of or both nitrogen gas and/or argon gas.

Optimally, the high-temperature pyrolysis heating temperature is 600 ∼ 1000°C, wherein the heating rate is 0.5 °C/min ∼ 15 °C/min, and wherein the holding time is 0h∼6 h.

Optimally, the silicon-based pore-forming agent is removed using a hydrofluoric acid or sodium hydroxide washing method, wherein the washing liquid is one or more of a 1% ∼ 10% hydrofluoric acid solution and/or a 0.5 mol/L ∼ 5 mol/L sodium hydroxide, wherein the washing temperature is 25 °C ∼60 °C, wherein the washing method includes centrifugation and/or suction filtration.

Optimally, the temperature of the drying process in step 5) is 50 °C ∼ 120 °C.

In another aspect, the present invention relates to boron-doped porous carbon spheres prepared using the method above.

The significant advantages of the present invention are as follows:
(1) The present invention has a significant economic advantage because the boron source and carbon source used, the boric acid and carbohydrate, are low in cost as compared to existing methods for preparing boron-doped carbon materials, which use expensive raw materials such as sodium borohydride and boron chloride;
(2) the present invention provides a method using an (aerosol-assisted) spray drying treatment method, which is a simple process that can be realized for continuous production, and has significant advantages for industrial application;
(3) the boron-doped porous carbon spheres made using the present invention is obtained by a molecular precursor self-assembly reaction, wherein the boron doping quantity and pore structure can be controlled by adjusting the ratio of the carbon source, boron source, and pore-forming agent in the precursor solution, thereby obtaining boron-doped porous carbon spheres to different applications; and
(4) the boron-doped porous carbon spheres prepared with the method herein have the advantages such as having high specific surface areas; the boron is capable of being doped in-situ; a high boron doping amount; structures that can be controlled; and high carbon structural stability, all of which have important application value in the field of lithium-ion batteries.

### BRIEF DESCRIPTION OF THE DRAWINGS

Fig. 1 (a) shows a SEM photomicrograph of boron-doped porous carbon spheres obtained in Example 1;
Fig. 1 (b) shows a SEM photomicrograph of boron-doped porous carbon spheres obtained in Example 1;
Fig. 1 (c) shows a TEM photomicrograph of boron-doped porous carbon spheres obtained in Example 1;
Fig. 1(d) shows a C-element distribution map of boron-doped porous carbon spheres obtained in Example 1;
Fig. 1(e) shows a B-element distribution map of boron-doped porous carbon spheres obtained in Example 1; and
Fig. 1(f) shows an O-element distribution map of boron-doped porous carbon spheres obtained in Example 1.
Fig. 2 shows the Raman spectra of boron-doped porous carbon spheres obtained in Example 1 compared with undoped porous carbon spheres obtained in Comparative Example 1.
Fig. 3 shows N₂ adsorption isotherms of boron-doped porous carbon spheres obtained in Example 1 compared with undoped porous carbon spheres obtained in Comparative Example 1.
Figure 4 shows the thermogravimetric curves under atmospheric air conditions of boron-doped porous carbon spheres obtained in Example 1 compared with undoped porous carbon spheres obtained in Comparative Example 1.
Fig. 5 shows X-ray photoelectron spectroscopy (XPS) peak curves of boron-doped porous carbon spheres obtained in Example 1 compared with the curve of undoped porous carbon spheres obtained in Comparative Example 1.
Fig. 6 shows cyclic voltammetric characteristic curves under a 0.2 mV s⁻¹ sweep speed for a lithium ion battery composed of boron-doped porous carbon spheres obtained in Example 1.
Fig. 7 shows constant current charge and discharge curves under a 0.2 A g⁻¹ current density for a lithium-ion battery composed of boron-doped porous carbon spheres obtained in Example 1.
Fig. 8 shows improved rate performance of boron-doped porous carbon spheres obtained in Example 1 compared with undoped porous carbon spheres obtained in Comparative Example 1.
Fig. 9 shows cyclic stability curves under a 0.2 A g⁻¹ current density for boron-doped porous carbon spheres obtained in Example 1 compared with undoped porous carbon spheres obtained in Comparative Example 1.
Fig. 10 shows cycle stability curves under a high current density of 5 A g⁻¹ for boron-doped porous carbon spheres obtained in Example 1 compared with undoped porous carbon spheres obtained in Comparative Example 1.

### PREFERRED EMBODIMENTS

The following combination of drawings and specific examples further elaborates the advantages of the present invention.

### EXAMPLE 1:

The present embodiment of the method for preparing boron-doped porous carbon spheres is carried out according to the following steps: 1.8 g of glucose and 1.24 g of boric acid were measured and dissolved in 15 mL of deionized water and stirred until complete dissolution; 4.2 g of tetraethyl orthosilicate, 2 mL of 0.1 mol/L hydrochloric acid, and 15 mL of ethanol were added in sequence and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; and the solid products obtained were heated to 900 °C in a tubular furnace at a heating rate of 8 °C /min in nitrogen and remained insulated for 3 hours; the carbonized products were washed by centrifugation with 10% hydrofluoric acid and deionized water three times, and then dried for 10 hours at 80 °C to obtain the boron-doped porous carbon spheres in this example.

### COMPARATIVE EXAMPLE 1:

The present invention provides a method for preparing undoped porous carbon spheres in order to ascertain the effect of boron doping on the structure of carbon materials: 1.8 g of glucose was measured and dissolved in 15 mL of deionized water and stirred to complete dissolution; 4.2 g of tetraethyl orthosilicate, 2 mL of 0.1 mol/L hydrochloric acid, and 15 mL of ethanol were added in sequence, and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; and the solid products obtained were heated to 900 °C in a tubular furnace at a heating rate of 8 °C /min in nitrogen and remained insulated for 3 hours; the carbonized products were washed by centrifugation with 10% hydrofluoric acid and deionized water three times, and then dried for 10 hours at 80 °C to obtain the undoped porous carbon spheres in Comparative Example 1.

### EXAMPLE 2:

1.8 g of sucrose and 1.8 g of boric acid were measured and dissolved in 15 mL of deionized water and stirred until complete dissolution; 4.2 g of tetraethyl orthosilicate, 2 mL of 0.1 mol/L hydrochloric acid, and 15 mL of ethanol were added in sequence, and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; the solid products obtained were heated to 900 °C in a tubular furnace at a heating rate of 8 °C /min in nitrogen and remained insulated for 3 hours; and the carbonized products were washed by centrifugation with 10% hydrofluoric acid and deionized water three times, and then dried for 10 hours at 80 °C to obtain the boron-doped porous carbon spheres in this example. XPS analysis shows that the boron concentration of the boron-doped porous carbon spheres was 4.5%.

### EXAMPLE 3:

1.8 g of soluble starch and 1.24 g of boric acid was measured and dissolved in 15 mL of deionized water and stirred until complete dissolution; 4.2 g of tetraethyl orthosilicate, 2mL of 0.1 mol/L hydrochloric acid, and 15 mL of ethanol were added in sequence and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; the solid products obtained were heated to 900 °C in a tubular furnace at a heating rate of 8 °C /min in nitrogen and remained insulated for 3 hours; and the carbonized products were washed by centrifugation with 10% hydrofluoric acid and deionized water three times, and then dried for 10 hours at 80 °C to obtain the boron-doped porous carbon spheres in this example. XPS analysis shows that the boron concentration of the boron-doped porous carbon spheres was 3.2%.

### EXAMPLE 4:

1.8 g of glucose and 1.24 g of boric acid were measured and dissolved in 15 mL of deionized water and stirred until complete dissolution; 15 g of a nano-SiO₂ solution (the solvent was water, the SiO₂ nanoparticle size was 15 nm ∼ 20 nm, and the mass fraction was 30%) were stirred for 1 h to form a precursor solution; then the precursor solution was carried by nitrogen into the aerosol-assisted spray drying unit at a temperature of 450 °C; the carrier nitrogen flow was controlled at 500 mL/min; the solid products obtained were heated to 900 °C in a tubular furnace at a heating rate of 8 °C/min in nitrogen and remained insulated for 3 hours; and the carbonized products were washed by centrifugation with 10% hydrofluoric acid and deionized water three times, and then dried for 10 hours at 80 °C to obtain the boron-doped porous carbon spheres in this example. XPS analysis shows that the boron concentration of the boron-doped porous carbon spheres was 2.5%.

### EXAMPLE 5:

1.8 g of maltose and 1.24g of boric acid were measured and dissolved in 15 mL of deionized water and stirred until complete dissolution; 4.2 g of tetraethyl orthosilicate, 2 mL of 0.1 mol/L hydrochloric acid, and 15 mL of ethanol were added in sequence and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; the solid products obtained were heated to 600 °C in a tubular furnace at a heating rate of 2 °C/min in nitrogen and remained insulated for 3 hours; and the carbonized products were washed by centrifugation with 10% hydrofluoric acid and deionized water three times, and then dried for 10 hours at 80 °C to obtain the boron-doped porous carbon spheres in this example. XPS analysis shows that the boron concentration of the boron-doped porous carbon spheres was 5.3%.

### EXAMPLE 6:

1.8 g of soluble starch and 0.6 g of boric acid were measured and dissolved in 15 mL of deionized water and stirred until complete dissolution; 15 g of a nano-SiO₂ solution (the solvent was water, the SiO₂ nanoparticle size was 15nm ∼ 20 nm, and the mass fraction was 30%) were added in sequence and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; the resulting solid products were heated to 1000 °C in a tubular furnace at a heating rate of 8 °C/min in nitrogen and remained insulated for 3 hours; and the resulting carbonized products were washed by centrifugation with a 5 mol/L sodium hydroxide solution and deionized water three times, and then dried for 10 hours at 80 °C to obtain the boron-doped porous carbon spheres in this example. XPS analysis shows that the boron concentration of the boron-doped porous carbon spheres was 0.8%.

### EXAMPLE 7:

1.8 g of glucose and 1.24 g of boric acid were measured and dissolved in 15 mL of deionized water and stirred until complete dissolution; 4.2 g of tetraethyl orthosilicate, 2 mL of 0.1 mol/L hydrochloric acid, and 15 mL of ethanol were added in sequence and the mixture was stirred for 1 h to form a precursor solution; then the precursor solution was carried by nitrogen into the aerosol-assisted spray drying unit at a temperature of 300 °C; the carrier nitrogen flow was controlled at 1 L/min; the resulting solid products were heated to 800 °C in a tubular furnace at a heating rate of 5 °C /min in nitrogen and remained insulated for 3 hours; and the carbonized products obtained were washed by centrifugation with 10% hydrofluoric acid and deionized water three times, and then dried for 10 hours at 80 °C to obtain the boron-doped porous carbon spheres in this example. XPS analysis shows that the boron concentration of the boron-doped porous carbon spheres was 3.6%.

### EXAMPLE 8:

1.8 g of sucrose and 1.24 g of boric acid were measured and dissolved in 15 mL of deionized water and stirred until complete dissolution; 8.4 g of tetraethyl orthosilicate, 4 mL of 0.1 mol/L hydrochloric acid, and 30 mL of ethanol were added in sequence, and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; the solid products obtained were heated to 900 °C in a tubular furnace at a heating rate of 8 °C/min in nitrogen and remained insulated for 3 hours; and the carbonized products obtained were washed by centrifugation with 10% hydrofluoric acid and deionized water three times, and then dried for 10 hours at 80 °C to obtain the boron-doped porous carbon spheres in this example. XPS analysis shows that the boron concentration of the boron-doped porous carbon spheres was 2.6%.

### EXAMPLE 9:

1.8 g of glucose and 0.9 g of boric acid were measured and dissolved in 15 mL of deionized water and stirred until complete dissolution; 2.1 g of tetraethyl orthosilicate, 1 mL of 0.1 mol/L hydrochloric acid, and 8 mL of ethanol were added in sequence, and the mixture was stirred for 1 h to form a precursor solution; then the precursor solution was carried by nitrogen into the aerosol-assisted spray drying unit at a temperature of 450 °C; the carrier nitrogen flow was controlled at 500 mL/min; the resulting solid products were heated to 1000 °C in a tubular furnace at a heating rate of 5 °C/min in nitrogen and remained insulated for 3 hours; and the carbonized products obtained were washed by centrifugation with 10% hydrofluoric acid and deionized water three times, and then dried for 10 hours at 80 °C to obtain the boron-doped porous carbon spheres in this example. XPS analysis shows that the boron concentration of the boron-doped porous carbon spheres was 2.3%.

### EXAMPLE 10:

3.6 g of sucrose and 3.6 g of boric acid were measured and dissolved in 30 mL of deionized water and stirred until complete dissolution; 30 g of a nano-SiO₂ solution (the solvent was water, the SiO₂ nanoparticle size was 15nm ∼ 20nm, and the mass fraction was 30%) were added in sequence, and the mixture was stirred for 1 h to form a precursor solution; then the precursor solution was carried by nitrogen into the aerosol-assisted spray drying unit at a temperature of 500 °C; the carrier nitrogen flow was controlled at 2 mL/min; the resulting solid products were heated to 900 °C in a tubular furnace at a heating rate of 8 °C /min in nitrogen and remained insulated for 3 hours; and the resulting carbonized products were washed by centrifugation with a 5 mol/L sodium hydroxide solution and deionized water three times, and then dried for 10 hours at 80 °C to obtain the boron-doped porous carbon spheres in this example. XPS analysis showed that the boron concentration of the boron-doped porous carbon spheres was 3.8%.

### EFFECT OF THE EXAMPLES

The structure and properties of the boron-doped porous carbon spheres obtained from Example 1 were analysed: analytic methods include Raman spectroscopy, scanning electron microscopy, transmission electron microscopy, thermogravimetric analysis, low-temperature N₂ adsorption, and X-ray photoelectron spectroscopy to determine the degree of graphitization, microscopic morphology, pore structure parameters, stability of carbon structures and amount of boron doping of the porous graphite material obtained in Example 1. The specific procedures were as follows:
The boron-doped porous carbon spheres obtained in Example 1 were used as anode materials for lithium-ion batteries. The performance test methods were as follows: using a lithium wafer as an electrode, and the boron-doped porous carbon spheres as the active material of the working electrode, a CR2032 button battery was assembled to test the performance of the spheres as cathode materials for lithium-ion batteries. The method for preparing the working electrodes was as follows: the boron-doped porous carbon spheres, carbon black and PVDF were dissolved in NMP in a mass ratio of 7:1.5:1.5 and ground into a uniform paste, after which the paste was coated onto copper foil and dried in vacuum at 80 °C for 12 hours to obtain the working electrode plates. The dried plates were cut into circular sheets, maintaining an active material density of 0.5 mg cm⁻² ∼ 1 mg cm⁻². The button cells were assembled with fresh lithium linings in a glove box. The electrolyte was 1 M LiPF₆ (the solvent was ethylene carbonate and diethyl carbonate, 1:1), and a Whatman fiberglass membrane was used as the diaphragm. The cyclic voltammetric characteristic curves and the constant current-constant voltage charge/discharge curves of the battery were tested in a voltage range of 0.01 V ∼ 3.0 V vs. Li/Li+. The results of the analysis are as follows:

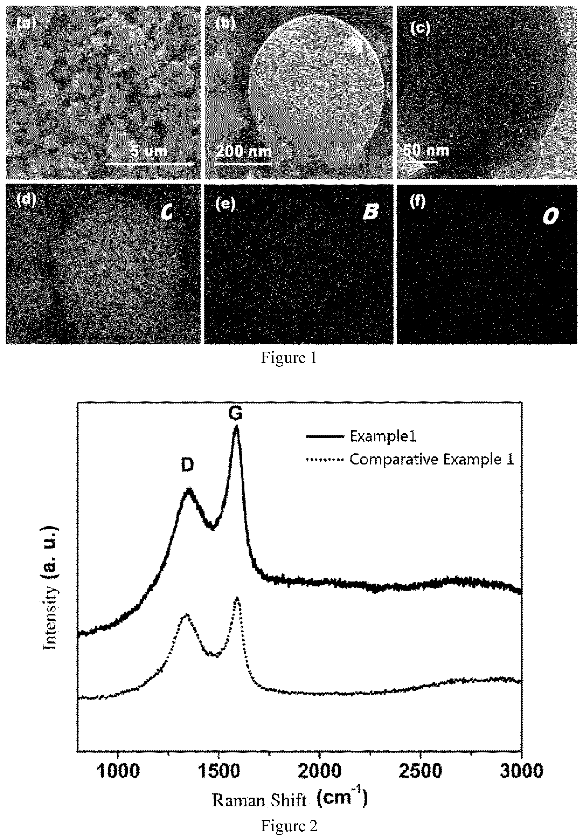

Fig. 1 (a) to (f) are the SEM, TEM and elemental distribution images of boron-doped porous carbon spheres obtained from Example 1. With scanning electron microscopy, it can be seen that boron-doped porous carbon spheres contain a large number of 50 nm ∼ 400 nm spherical particles, and with transmission electron photomicrographs it can be seen that a large number of micro-porous structures are uniformly distributed in a single sphere. Further analysis shows that the pore sizes are about 2 nm. The elemental distribution diagram shows that C, B and O elements are uniformly distributed in the boron-doped porous carbon spheres obtained in Example 1, which successfully demonstrates that the boron element is in-situ and is uniformly doped.

Fig. 2 depicts the Raman spectra of boron-doped porous carbon spheres obtained in Example 1 compared with undoped porous carbon spheres obtained in Comparative Example 1. It can be seen that the boron-doped porous carbon spheres obtained in the Example 1 have a stronger G-peak intensity than the undoped porous carbon spheres obtained in Comparative Example 1, which demonstrates that the degree of graphitization of carbon materials is greatly improved by boron doping.

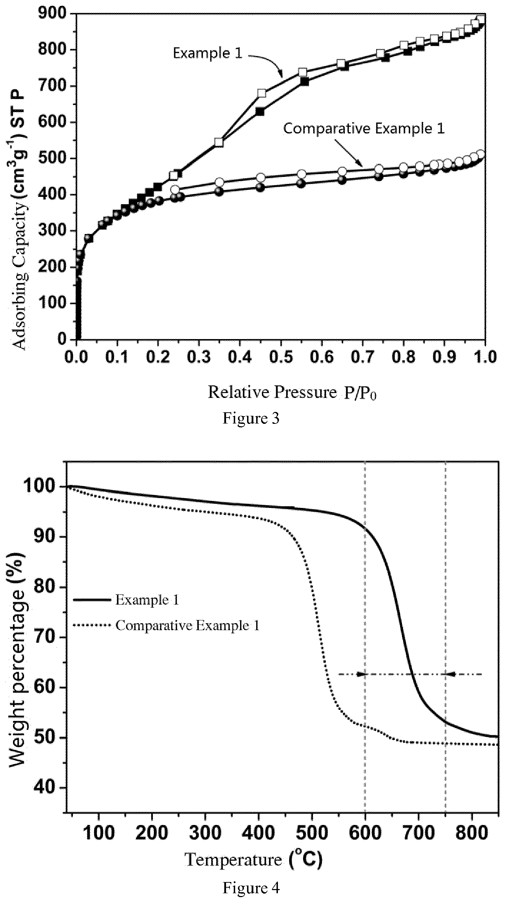

Fig. 3 shows N₂ adsorption isotherms of boron-doped porous carbon spheres obtained in Example 1 compared with undoped porous carbon spheres obtained in Comparative Example 1. It can be seen that the boron-doped porous carbon spheres obtained in Example 1 present characteristics of a graded pore structure, while the undoped porous carbon spheres obtained in Comparative Example 1 are microporous materials, indicating that boron doping widened the pore range of carbon materials. Graded pore structures are more advantageous towards electrochemical diffusion and reactive process. The adsorption isotherm analysis shows that the specific surface area of the porous carbon spheres obtained in Example 1 is 1551 m²g⁻¹ and the pore volume is 1.35 cm² g⁻¹.

Fig. 4 shows the thermogravimetric curves compares boron-doped porous carbon spheres obtained from Example 1 to that of undoped porous carbon spheres obtained from Comparative Example 1 under atmospheric air conditions. It can be clearly seen that the weight loss temperature of boron-doped porous carbon spheres shifted up by nearly 150 °C, demonstrating that boron doping greatly improves the thermal stability of carbon materials.

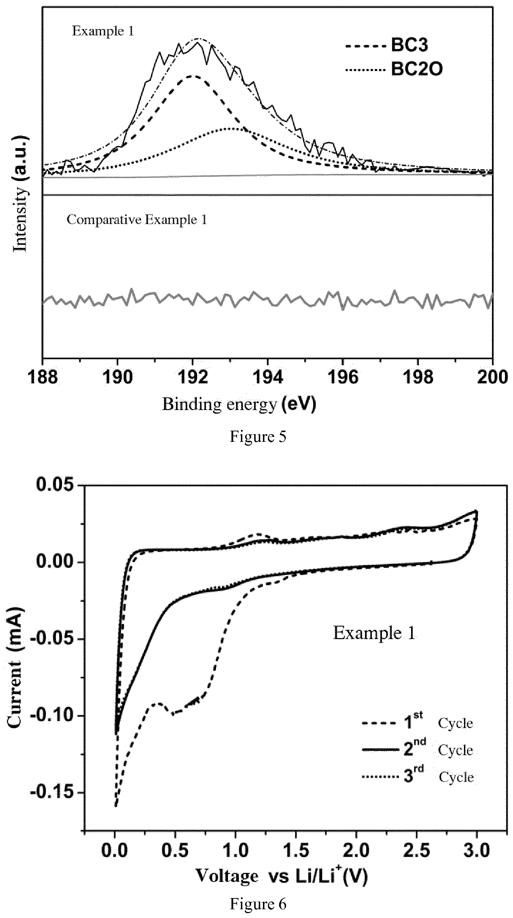

Fig. 5 shows the X-ray photoelectron spectroscopy peak curves of the boron-doped porous carbon spheres obtained from Example 1 compared with the curve of the undoped porous carbon spheres obtained from Comparative Example 1. It can be clearly seen that the undoped porous carbon spheres in Comparative Example 1 do not emit a boron signal, while the boron-doped porous carbon spheres obtained in Example 1 have an obvious boron signal, and the presence of boron includes two structural units BC₃ and BC₂O. XPS elemental concentration analysis shows that the boron-doping concentration of boron-doped porous carbon spheres obtained from Example 1 can reach 4.25 -wt%.

Fig. 6 is the cyclic voltammetric characteristic curves of a lithium-ion battery assembled from the boron-doped porous carbon spheres obtained from Example 1 at a sweep speed of 0.2mV s⁻¹, which shows typical carbon anode characteristics. The first cycle has a greater capacity and remains stable after two cycles because of the formation of a SEI layer.

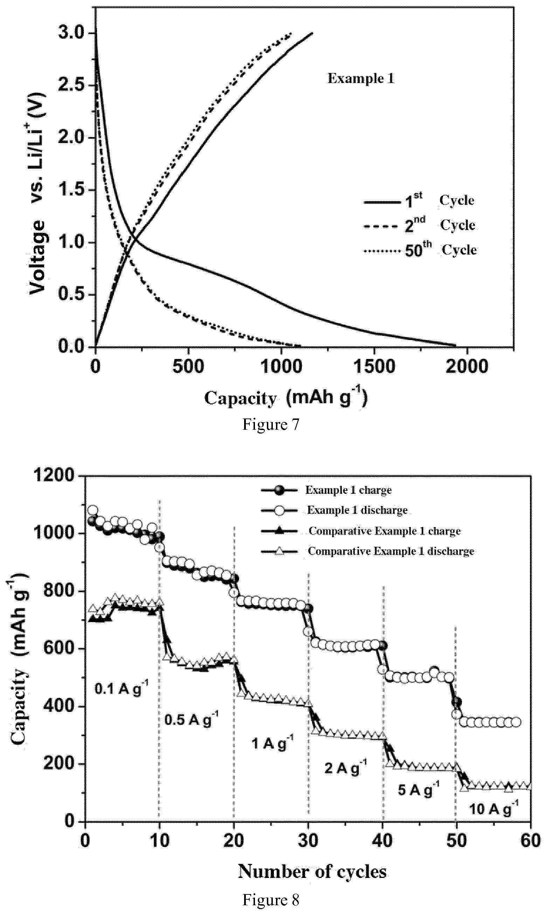

Fig. 7 shows the constant current charge-discharge curves of a lithium-ion battery assembled from the boron-doped porous carbon spheres obtained from Example 1 at a current density of 0.2 A g⁻¹, which corresponds to the cyclic voltammetric curves in Fig. 6. The first-cycle capacity is greater and remains stable after two cycles. The first-cycle discharge capacity can reach 1934 mAh g⁻¹, and after 50 cycles, stabilizes at 1160 mAh g⁻¹, which is about 3 times that of commercial graphite materials.

Fig. 8 shows the improved rate performance curves of the boron-doped porous carbon spheres obtained from Example 1 compared with the undoped porous carbon spheres obtained from Comparative Example 1. It can be seen that the boron-doped porous carbon spheres obtained from Example 1 exhibit excellent rate performance compared with the undoped porous carbon spheres, and still have a capacity of 374 mAh g⁻¹ at a high current density of 10 A g⁻¹.

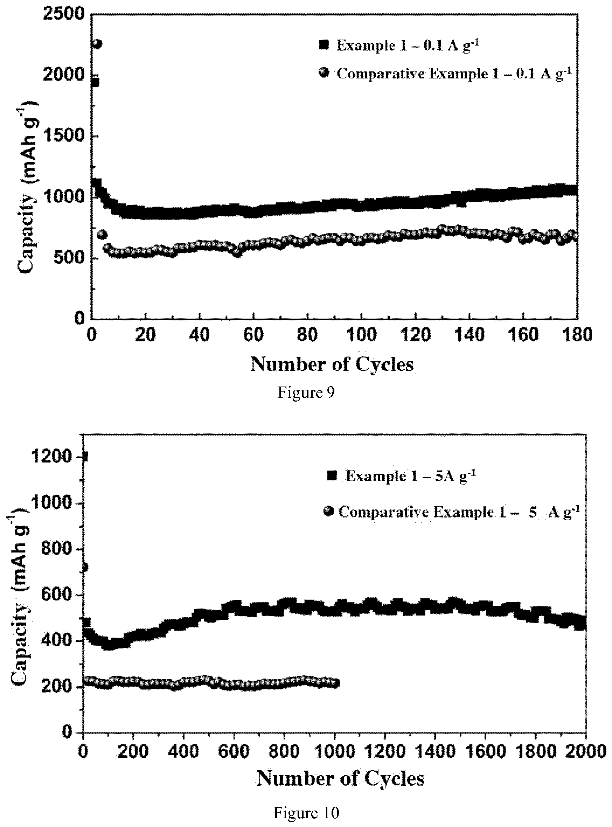

Fig. 9 shows the cyclic stability curves at a current density of 0.2 Ag⁻¹ of boron-doped porous carbon spheres obtained from Example 1 compared with undoped porous carbon spheres obtained from Comparative Example 1. Over 180 cycles, the boron-doped porous carbon spheres had almost no decay and still remained at 1062 mAh g⁻¹.

Fig. 10 shows the cyclic stability curves at a high current density of 5 A g⁻¹ of the boron-doped porous carbon spheres obtained from Example 1 compared with the undoped porous carbon spheres obtained from Comparative Example 1. With an increase in the number of cycles, the lithium-ion storage capacity of boron-doped porous carbon spheres increases gradually, which is due to the activation of the electrochemical reaction process of the porous carbon material, and the capacity is 502 mAh g⁻¹ after 2000 cycles. In contrast, the undoped porous carbon spheres obtained from Comparative Example 1 is short-circuited when the 1000th cycle is reached. This fully demonstrates the effect of boron doping on the cyclic stability of carbon structures.

It should be noted that the examples of the present invention can be readily implemented and do not impose any limitations on the present invention whatsoever. Any person of ordinary skill in the art may use the technical content disclosed above to enhance it or modify it to an equivalently effective embodiment. Any modification or equivalent change or enhancement to the above embodiments based on the technical essence of the present invention and does not exceed the technical scheme of the present invention shall be within the scope of the technical scheme of the present invention.

## Claims

1. A method for preparing boron-doped porous carbon spheres, **characterized by** and comprising the following steps:
1) dissolving a carbohydrate carbon source with a boric acid in a desired proportion in water and mixing and stirring to obtain a transparent solution;
2) adding a silicon-based pore-forming agent to said transparent solution resulting from step 1) and stirring to obtain a precursor solution to boron-doped porous carbon spheres;
3) passing said precursor solution resulting from step 2) through an aerosol-assisted spray drying process to obtain solid-state precursor particles of boron-doped porous carbon spheres;
4) pyrolyzing said solid particles resulting from step 3) at a high-temperature in an inert atmosphere in order to obtain a mixture in which a pore template SiO₂ is embedded in a boron-doped carbon sphere; and
5) removing the silicon-based pore-forming agent resulting from step 4) from the mixture, and drying to obtain boron-doped porous carbon spheres.

2. The method of claim 1, wherein said carbohydrate carbon source is selected from one or more of glucose, sucrose, maltose, chitosan and soluble starch, and the boric acid to carbohydrate mass ratio is 1:10 ∼ 1:1.

3. The method of claim 1, wherein said silicon-based pore-forming agent is selected from one or more of tetraethyl orthosilicate (TEOS), nano-silica (SiO₂) and sodium silicate, and wherein the silicon-based pore-forming agent to carbohydrate mass ratio is 5:1 ∼ 1:5.

4. The method of claim 1, wherein the heating temperature of said spray drying process is 300 °C ∼ 600 °C.

5. The method of claim 1, wherein the aerosol droplet carrier gas in said spray drying process is one of or both nitrogen and/or argon gas, and the gas flow rate is 0 L/min ∼ 10 L/min.

6. The method of in claim 1, wherein the inert-gas atmosphere from step 4) is one of nitrogen and/or argon gas, or both.

7. The method of in claim 1, wherein the heating temperature of said high-temperature pyrolysis is 600 °C ∼ 1000 °C, the heating rate is 0.5 °C ∼ 15 °C /min, and the temperature holding time is 0 h ∼ 6 h.

8. The method of in claim 1, wherein said silicon-based pore-forming agent is removed by hydrofluoric acid or sodium hydroxide washing, and the washing liquid is either a 5% - 10% hydrofluoric acid solution or a 0.5 mol/L - 5 mol/L sodium hydroxide, wherein the washing temperature is 25 °C - 60 °C, and wherein the washing method comprises centrifugation and suction filtration.

9. The method of in claim 1, wherein the temperature of the drying process in step 5) is 50 °C - 120°C.

10. Boron-doped porous carbon spheres made by any one of said methods of claims 1-9.
